# EUROPÄISCHE PATENTSCHRIFT

(11) **EP 2 678 570 B1**
(45) Veröffentlichungstag und Bekanntmachung des Hinweises auf die Patenterteilung: **29.04.2015**
(21) Anmeldenummer: 12718564.3
(22) Anmeldetag: 14.02.2012
(51) Int. Cl.: F15B 7/00

(54) **HYDRAULISCHE EINRICHTUNG ZUR BETÄTIGUNG EINER KUPPLUNG**
HYDRAULIC DEVICE FOR ACTUATING A CLUTCH
DISPOSITIF HYDRAULIQUE POUR ACTIONNER UN EMBRAYAGE

(30) Priorität: 23.02.2011 DE 102011012180; 30.09.2011 DE 102011083880
(43) Veröffentlichungstag der Anmeldung: 01.01.2014
(73) Patentinhaber: Schaeffler Technologies AG & Co. KG, 91074 Herzogenaurach (DE)
(72) Erfinder: GRETHEL, Marco, 77830 Bühlertal (DE); ENGLISCH, Andreas, 77815 Bühl (DE); MÜLLER, Eric, 67657 Kaiserslautern (DE)
(86) Internationale Anmeldenummer: PCT/DE2012/000129
(87) Internationale Veröffentlichungsnummer: WO 2012/113368

(56) Entgegenhaltungen:
- EP-A1- 1 306 560
- DE-A1-102008 039 011

## Beschreibung

Die Erfindung betrifft eine hydraulische Einrichtung zur Betätigung einer Kupplung.

Bekannt sind hydraulische Kraftübertragungsstrecken mit Nehmer- und Geberzylindem. Der hydraulische Nehmerzylinder ist hierbei der Kupplung örtlich nahe zugeordnet. Bei automatisierten Übertragungsstrecken kann der Geberzylinder als eine steuerbare und/oder regelbare Volumenstromquelle ausgeführt sein.

Es sind grundsätzlich zwei Arten von Volumenstromquellen für derartige Kraftübertragungsstrecken bekannt. Dabei handelt es sich in einem Fall um eine Teilfunktion einer komplexeren hydraulischen Steuerung, die noch weitere Aufgaben erfüllen kann. Die Volumenströme einer mechanisch oder elektrisch angetriebenen Hydraulikpumpe werden dabei über eine Ventillogik aufgeteilt und ein Teilstrom wird zur Kupplungsbetätigung verwendet Diese Lösung ist aufwendig, wenn nur eine oder zwei hydraulische Funktionen benötigt werden.

In einem anderen Fall wird ein sogenannter Hydrostataktor als Volumenstromquelle eingesetzt Derartige Lösungen sind beispielsweise in der Druckschrift WO 2011050767 A1 oder DE 2008 039011 beschrieben. Dabei wird eine Drehbewegung eines elektrischen Antriebs auf eine Gewindespindel übertragen, die mit als Planeten um die Gewindespindel herum angeordneten weiteren Gewindespindeln im Kontakt steht und auf diese Weise eine lineare Bewegung der Planeten erzeugt, die wiederum eine Verbindung mit einem Verdrängerkolben haben und diesen linear hin und her bewegen. Allerdings kann sich die große Übersetzung der Drehbewegung in die Linearbewegung negativ auf das Hystereseverhalten und die Dynamik auswirken.

Die Aufgabe der Erfindung besteht darin, eine hydraulische Einrichtung zur Betätigung einer Kupplung bereitzustellen, die als kompakte Einheit ausführbar ist, ein deutlich verbessertes Ansprechverhalten hat, die sich in fahrzeuginterne Steuerungssysteme integrieren lässt, aber auch solitär betrieben werden kann, weitgehend wartungsfrei arbeitet und im Übrigen die bei den Lösungen des Standes der Technik aufgezeigten Nachteile nicht aufweist

Die Aufgabe wird gelöst mit einer hydraulische Einrichtung zur Betätigung einer Kupplung, mit den Merkmalen des kennzeichnenden Teils des Patentanspruches 1 in Verbindung mit den Merkmalen des Oberbegriffes dieses Anspruches.

Demgemäß betrifft die vorliegende Erfindung eine hydraulische Einrichtung, insbesondere zur Betätigung einer Kupplung, mit einem nahe der Kupplung angeordneten hydraulischen Arbeitszylinder, wobei der Arbeitszylinder über eine hydraulische Leitung mit einer Volumenstromquelle verbunden ist. Der Volumenstrom der Volumenstromquelle ist durch eine Steuereinheit in Abhängigkeit von Signalen der der hydraulischen Einrichtung zugeordneten Sensoren beeinflussbar. Die Volumenstromquelle ist durch eine in einem gemeinsamen Gehäuse angeordnete Kombination bzw. Einheit aus einem Elektromotor und einer Pumpe gebildet.

Gemäß der vorliegenden der Erfindung wird der oben beschriebene Hydrostataktor dergestalt weiterentwickelt, dass vorteilhafterweise anstelle eines voluminösen Verdrängerkolbens und eines komplizierten Planetengetriebes eine vergleichsweise einfache Pumpenanordnung verwendet werden kann, deren Drehzahl reversiert werden kann. Eine solche Einrichtung kann gemäß einem Vorteil der vorliegenden Erfindung kleiner als ein Hydrostataktor gebaut werden und lässt sich in vielfacher Weise an Einsatzbedingungen anpassen, wodurch die Freizügigkeit bei der Anordnung bzw. beim Einbau zusätzlich verbessert wird. Die erfinderische Lösung besteht also darin den Verdrängerkolben und das Planetengetriebe des Hydrostataktors durch eine spezielle Pumpenanordnung zu ersetzen.

Die erfindungsgemäße hydraulische Einrichtung kann beispielsweise zur Versorgung und Ansteuerung einfach wirkender Hydraulikzylinder verwendet werden. Eine Kombination aus einem Elektromotor und einer Hydraulikpumpe ist so ausgelegt, dass ein schneller Druckaufbau und bei Bedarf ein schneller Drehrichtungswechsel möglich sind. Elektromotor und Pumpe sind deshalb so ausgelegt, dass sie mit hoher Dynamik auf Änderungen reagieren können. Rotierende Teile sind deshalb zur Verminderung von Trägheiten möglichst klein dimensioniert.

Bei den Hydraulikpumpen ist vorteilhafterweise jede Ausführungsform geeignet, die unmittelbar mit dem Anlauf einen großen Volumenstrom und ein hohes Druckniveau gewährleisten kann. Geeignete Bauformen hierfür sind Zahnrad-, Flügelrad-, Drehschieber-, Radial- oder Axialkolbenpumpen.

Wird eine Kupplung mit der vorliegenden hydraulischen Einrichtung betätigt, wird die Pumpe durch den Elektromotor angetrieben, so dass das Fluid in Richtung zum Arbeitszylinder (Nehmerzylinder) gefördert wird. Ein Sensorsystem überwacht hierbei den Betätigungszustand der Kupplung, des Kupplungsausrückers oder des Arbeitszylinders. Über Sensorsignale können die Pumpendrehzahl und / oder die Pumpenlaufdauer permanent geregelt werden, um den Zielzustand der Kupplung zu erhalten. Das Sensorsignal kann von einer Wegmessung an der Kupplung oder einer Druckmessung in der hydraulischen Strecke zur Kupplung oder von beiden generiert werden.

Zum Halten der Kupplung in der Zielposition gibt es die folgenden bevorzugten Möglichkeiten. Im einen Fall wird die Drehzahl der Pumpe so weit reduziert, dass sie nur noch ihren eigenen Leckagestrom ausgleicht. Das heißt, die Pumpe hält den Druck, ohne dass weiteres zusätzliches Fluid in die hydraulische Strecke zur Kupplung gefördert wird und die Kupplung eine zusätzliche Betätigung erfährt. Es wird also lediglich der Leckagestrom ausgeglichen. Vorteilhaft ist es hierbei, dass keine weiteren Bauteile zum Halten der Kupplungsposition notwendig sind. Allerdings muss permanent Energie zum Halten der Kupplung aufgebracht werden.

Im anderen Fall ist ein Ventil vorgesehen, das die Hydraulikstrecke zwischen Pumpe und Kupplung verschließt, sobald die Zielposition der Kupplung erreicht ist. Mit besonderem Vorteil wird als Ventil ein Sitzventil (Rückschlagventil) gewählt Die sehr geringe Leckage des Sitzventils ermöglicht es, dass die Pumpe und damit der Elektromotor nicht permanent getrieben werden müssen, um die Kupplung in der Zielposition zu halten. Der Energiebedarf für die Betätigung des Ventils ist dabei geringer als das Betreiben des Elektromotors zum Halten der Kupplung ohne Ventil. Allerdings wird ein zusätzliches Bauteil in der Form eines Elektromagneten zum Betätigen des Ventils benötigt

Zum Deaktivieren der Kupplung können folgende Strategien eingesetzt werden. Die Pumpe kann aktiv entgegen ihrer Förderrichtung betrieben (reversiert) werden, um die hydraulische Strecke schnell zu entleeren. Bei diesem Vorgang kann es erforderlich sein, dass der Betätigungszustand der Kupplung über eine Sensorik überwacht wird. Nach dem so genannten Kiss-Point der Kupplung wird in der Regel keine große Dynamik bzw. eine geringere Dynamik bezüglich der weiteren Öffnung gefordert. Um ein Leersaugen der hydraulischen Strecke zu verhindern, kann ab dem Kiss-Point oder kurz danach die Pumpendrehzahl auf Null gebracht werden. Die Restentleerung der hydraulischen Strecke kann dann über die Spalte der Pumpe erfolgen.

Bei dynamisch unkritischen Vorgängen ist es vorstellbar, dass die in der Kupplung und der hydraulischen Strecke gespeicherte Energie teilweise zurückgewonnen werden kann. Die Pumpe arbeitet dann als hydraulischer Motor und der Elektromotor als Generator.

Wenn das System zusätzlich noch ein Verriegelungsventil aufweist, ist dieses zeitgleich mit oder vor der Deaktivierung der Kupplung zu öffnen. Eine Auslegung des hydraulischen Systems der Einrichtung kann durch den Fachmann auf vielfältige Weise erfolgen. So kann eine Auslegung unter anderem nach den Erfordernissen der anzusteuernden Kupplung, nach äußeren Anforderungen, wie beim Fahrzeugbetrieb, sowie unter Optimierungs- und energetischen Gesichtspunkten erfolgen.

Es ist bei einer vorteilhaften Ausgestaltung der Erfindung auch möglich zwischen der Kupplung und dem Ventil in dem gemeinsamen Gehäuse einen Druckspeicher anzuordnen. Dieser Druckspeicher kann zum Beispiel als Tellerfederspeicher ausgeführt sein. Der Druckspeicher kann je nach seiner Auslegung zwei unterschiedliche Funktionen erfüllen. Einerseits kann er eine Reduzierung des Leistungsbedarfes beim Betätigungsvorgang bewirken und andererseits kann er für eine Volumennachführung beim Halten der Kupplung zum Ausgleich auftretender Leckagen sorgen.

Neben der oben beschriebenen Versorgung eines einfach wirkenden Zylinders kann mittels der Reversierpumpeneinheit, die aus einem Elektromotor mit Elektronik zum Steuern und/oder Regeln der Pumpleistung und der Hydraulikpumpe besteht, auch ein doppelt wirkender Zylinder angesteuert werden. Im einfachsten Fall wird mittels der Reversierpumpeneinheit gezielt das Volumen von einer Zylinderkammer in die andere Zylinderkammer gefördert. Wenn die Volumina der beiden Zylinderräume unterschiedlich groß sind, kann ein einfaches Umpumpen des Fluids vom einen in den anderen Zylinderraum nicht erfolgen. In diesem Fall kann eine Anordnung von sogenannten Nachsauge- und Überdruckventilen für einen ausgeglichenen Fluidhaushalt sorgen.

Die erfindungsgemäße hydraulische Einrichtung mit der Kombination aus Elektromotor und Pumpe kann vorteilhafterweise sehr kompakt aufgebaut sein und die folgenden Merkmale aufweisen. Der Rotor und der Stator des Elektromotors können sich mit der Verdrängereinheit der Pumpe ein gemeinsames Gehäuse teilen. Der Rotor des Elektromotors kann vollständig oder teilweise in den Lagerbrillen der Zahnradpumpe gelagert werden. Eine Lagerstelle des Elektromotors bzw. der Pumpe kann auch in das Ventiloder das Druckspeichergehäuse gelegt werden. Die Ventileinheit und der Tellerfederdruckspeicher können sich ein weiteres Gehäuseteil teilen. DerTankraum kann zwischen dem Motor-/ Pumpengehäuse und dem Ventil- bzw. Druckspeichergehäuse angeordnet sein. Je nach Anwendungsfall kann die Ventileinheit ausgetauscht und ggf. auf die Speicherfunktion verzichtet werden. Die systemrelevante Sensorik d.h. die Drehzahl-, Drehwinkel- und / oder Drucksensorik kann direkt in die Steuerelektronik der Elektromotor/Pumpenkombination integriert werden. Die besondere Kompaktheit dieser Kombination ermöglicht in vielen Fällen eine örtliche Nähe zum Aktor, so dass auch eine Wegmessung in die Steuerelektronik integrierbar ist Die Spule für den Elektromagneten des Ventils kann ebenfalls direkt in Steuereinheit integriert sein.

Bei einer weiteren Ausführungsform der Erfindung kann eine Bypassblende oder eine Bypassdrossel zwischen den Pumpenanschlüssen vorgesehen sein, um eine gezielte "Verschlechterung" des volumetrischen Wirkungsgrads der Pumpe herbeizuführen. Damit wird die "Druckhaltedrehzahl" erhöht und somit die Regelbarkeit des Druckes verbessert.

Die Erfindung wird nachstehend anhand von Ausführungsbeispielen und Zeichnungen näher erläutert. Dabei zeigen:
- Figur 1: das hydraulische Schema einer erfindungsgemäßen hydraulischen Einrichtung mit einem einfach wirkenden Hydraulikzylinder mit Federrückstellung und mit einer elektrisch angetriebenen Reversierpumpe, einem Steuerventil, einem Hochtank und einem Drucksensor;
- Figur 2: eine im Vergleich zur Einrichtung der Figur 1 weiter entwickelte erfindungsgemäße Einrichtung, bei der ein zusätzlicher Druckspeicher vorgesehen ist;
- Figur 3: eine erfindungsgemäße hydraulische Einrichtung, bei der ein Bypass parallel zur Reversierpumpe angeordnet ist;
- Figur 4: eine erfindungsgemäße hydraulische Einrichtung zur Ansteuerung eines doppelt wirkenden Arbeitszylinders;
- Figur 5: eine perspektivische Darstellung der erfindungsgemäßen hydraulischen Einrichtung mit einem kompakten Einheitsgehäuse für alle Komponenten Einrichtung, zum Teil in Explosionsdarstellung; und
- Figur 6: eine Schnittdarstellung des kompakten Einheitsgehäuses der Figur 5 mit allen darin angeordneten Einzelkomponenten.

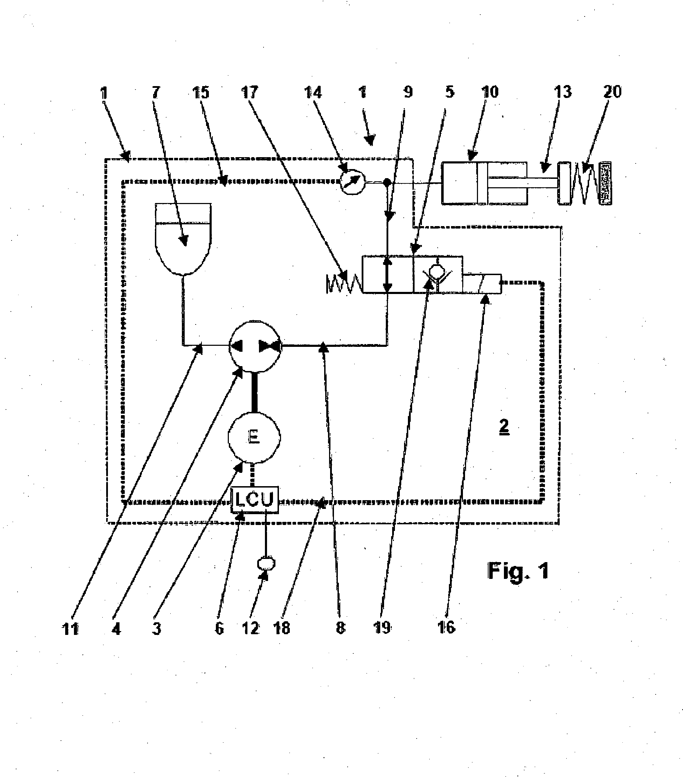

Die Grundschaltung der vorliegenden hydraulischen Einrichtung ist in der Figur 1 dargestellt.

Innerhalb eines durch eine unterbrochene Umrisslinie schematisch dargestellten gemeinsamen Gehäuses 1 ist eine hydraulische Einrichtung 2 angeordnet. Diese besteht im wesentlichen aus einem Elektromotor 3, der mit einer Verdrängerpumpe 4 kraftschlüssig verbunden ist, einem 2/2-Steuerventil 5, einer elektrischen Steuereinheit 6, einem Vorratsbehälter 7, einer hydraulischen Leitung 8 zwischen der Verdrängerpumpe 4 und dem Eingang des 2/2-Steuerventils 5, einer hydraulischen Leitung 9 zwischen dem Ausgang des 2/2-Steuerventils 5 und einem Arbeitszylinder 10 sowie einer hydraulischen Leitung 11 zwischen der Verdrängerpumpe 4 und dem Vorratsbehälter 7.

Die Steuereinheit 6 ist über einen Anschluss 12 mit einer Steuereinrichtung eines übergeordneten Systems, z. B. mit Sensoren an einem Kupplungspedal und/oder mit weiteren Sensoren, die bestimmte Zustände innerhalb eines Antriebsstranges ermitteln, verbunden. Sie kann daraus oder durch manuell ausgelöste Befehle ein Signal generieren, das den Elektromotor 3 anlaufen lässt. Mit dem Anlaufen des Elektromotors 3 läuft zugleich die Verdrängerpumpe 4 an. Sie saugt Hydraulikflüssigkeit aus dem Vorratsbehälter 7, wobei in der Leitung 8 ein höherer Druck aufgebaut wird. Das 2/2-Steuerventil 5 ist in seiner Ausgangsstellung so geschaltet, dass die Leitung 8 und die Leitung 9 miteinander verbunden sind, sodass der Arbeitszylinder 10 mit einem Druck-Volumenstrom beaufschlagt und die Kolbenstange 13 zur Betätigung einer nicht dargestellten Kupplung ausgefahren wird.

Generiert die Steuereinheit 6 wiederum aufgrund der von außen gelieferten Signale einen Befehl, der den Arbeitszyklus des Arbeitszylinders 10 beendet, steuert sie den Elektromotor 3 und die Verdrängerpumpe 4 in die entgegengesetzte Drehrichtung, sodass der Arbeitszylinder 10 leer gesaugt und daher eingefahren wird. Der abgesaugte Volumenstrom wird in den Vorratsbehälter 7 zurückbefördert.

Bei der oben beschriebenen Arbeitsweise kann auch auf das 2/2-Steuerventil 5 verzichtet werden und die Leitungen 8 und 9 können direkt miteinander verbunden werden.

Die Verdrängerpumpe 4 kann eine Pumpe beliebiger Ausführungsform sein, sofern sie den geforderten Volumenstrom liefern und das geforderte Druckniveau erreichen kann. Insbesondere sind als Verdrängerpumpen 4 Hydraulikpumpen geeignet, die schnelle Drehzahländerungen, inklusive schnelle Anläufe und Drehrichtungswechsel ausführen können. Besonders geeignet sind Pumpen, beispielsweise Außenzahnradpumpen, bei denen die Verdrängungsräume rein geometrisch definiert bzw. stabilisiert sind, geeignet

Ein Druckmesssensor 14 kann über eine Signalleitung 15 mit der Steuereinheit 6 verbunden sein, sodass diese die den Pumpvorgang stoppen kann, sobald das für einen erfolgreichen Arbeitszyklus des Arbeitszylinders 10 erforderliche Druckniveau erreicht ist.

Ebenso kann die Steuereinheit 6 Messsignale des Druckmesssensors 14 auswerten und die Verdrängerpumpe 4 intermittierend oder auch mit geringerer Drehzahl laufen lassen, um ein aufgrund von Leckagen abfallendes Druckniveau aufrecht zu erhalten.

Eine bevorzugte Ausführungsform der hydraulischen Einrichtung sieht die Anordnung des 2/2-Steuerventils 5 vor, das durch einen Elektromagneten 16 ansteuerbar und durch ein Federelement 17 rückstellbar ist. In seiner dargestellten ersten Stellung, die die Ausgangsstellung bildet, stellt das 2/2-Steuerventil 5 eine Verbindung zwischen der Verdrängerpumpe 4 und dem Arbeitszylinder 10 her. Sobald der Druckmesssensor 14 an die Steuereinheit 6 das Erreichen des geforderten Druckniveaus meldet, kann die Steuereinheit 6 über die elektrische Leitung 18 den Elektromagneten 16 ansteuern und das 2/2-Steuerventil 5 in die zweite Stellung steuern, in der ein Sitzventil 19 des 2/2-Steuerventils 5, ein Rückfließen des Hydraulikmediums verhindert.

Die Verdrängerpumpe 4 muss bei diesem Anwendungsfall also in energiesparender Weise nur bis zum Erreichen des geforderten Druckniveaus betrieben werden und durch das Umschalten des Steuerventils 5 in die zweite Stellung wird der Arbeitszylinders 10 in der ausgefahrenen Stellung gehalten.

Eine übliche Kupplung beinhaltet eine Federanordnung 20, welche den Arbeitszylinder 10 in die Ausgangsstellung zurückstellt, ansonsten kann eine separate Federanordnung 20 zur Rückstellung vorgesehen sein.

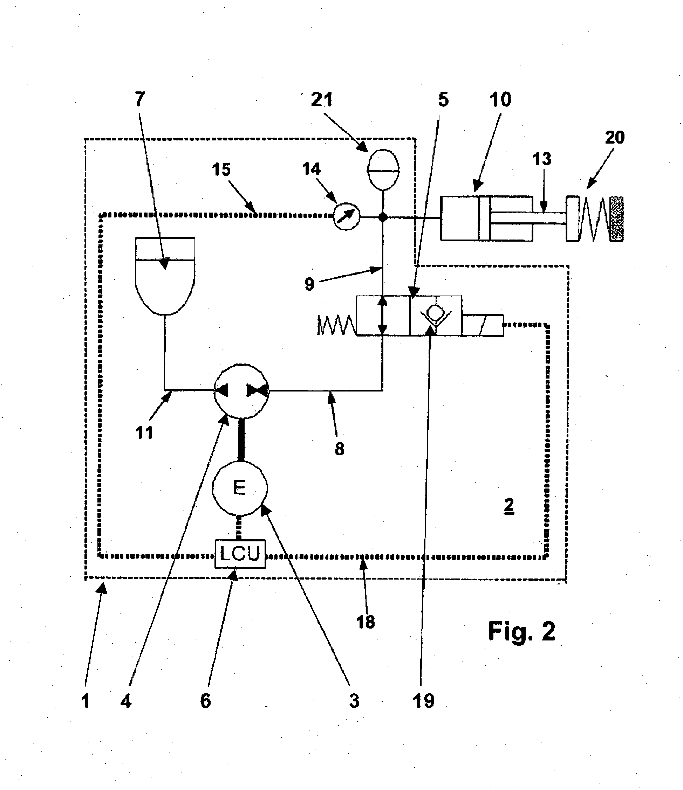

Gemäß Figur 2 sieht eine verbesserte Ausführungsform im Bereich der Leitung 9 zusätzlich einen Druckspeicher 21 vor, der beispielsweise als Tellerfederspeicher ausgeführt sein kann. Dieser kann durch eine Volumennachführung bei Erreichen des ausgefahrenen Zustandes des Arbeitszylinders 10 in der zweiten Stellung des 2/2-Steuerventils 5 dafür sorgen, dass auftretende Leckströme ausgeglichen werden und das geforderte Druckniveau in der Leitung 9 und in dem Arbeitszylinder 10 bestehen bleibt. Außerdem kann eine Integration des Leistungsbedarfes beim Betätigungsvorgang erfüllt werden.

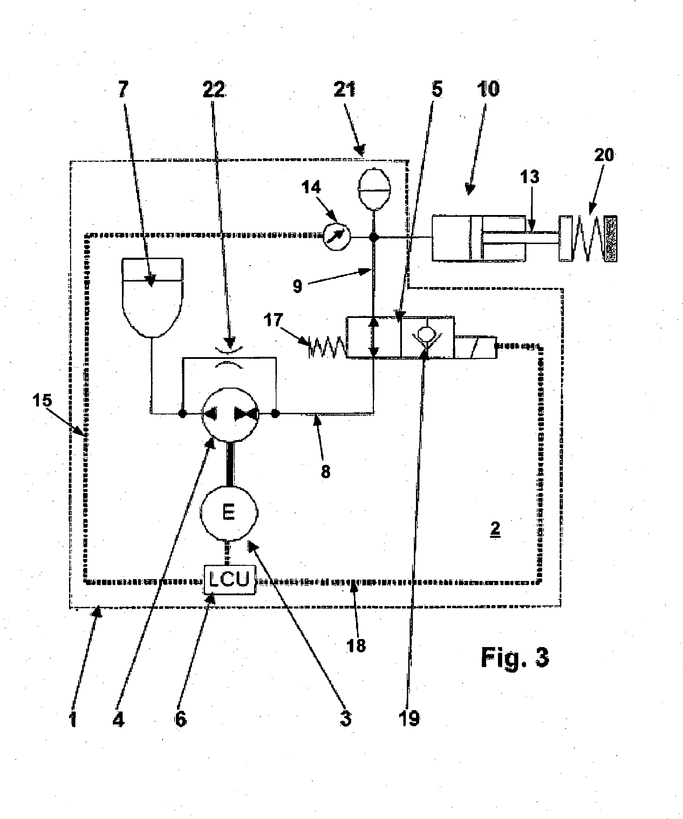

Eine weitere bevorzugte Ausführungsform der hydraulischen Einrichtung umfasst gemäß Figur 3 eine parallel zur Verdrängerpumpe 4 angeordnete Bypassblende bzw. Drosseleinrichtung 22. Der über die Drosseleinrichtung 22 auftretende Verluststrom mindert zwar bewusst den volumetrischen Wirkungsgrad der Verdrängerpumpe 4. Dies hat zur Folge, dass die erforderliche Drehzahl des Elektromotors 3 zur Einregelung eines definierten Drucks im Arbeitszylinder 10 höher wird, was aber bezüglich der Drehzahlsteuerung / Drehzahlregelung bei kleinen erforderlichen Förderströmen deutliche Vorteile darstellt.

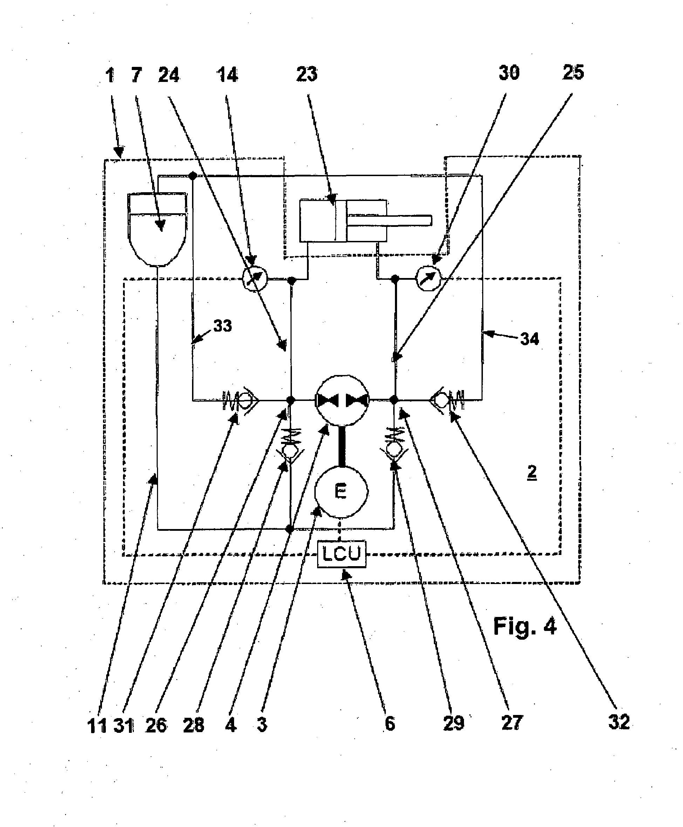

Eine weitere Ausführungsform der hydraulischen Einrichtung sieht gemäß Figur 4 einen Arbeitszylinder 23 in doppelt wirkender Ausführung vor. Die Verdrängerpumpe 4 wird dabei durch den Elektromotor 3 so angesteuert, dass sie über die Leitung 24 den Arbeitszylinders 23 (linke Kammer) füllt und dieser ausfährt. Am Ende des Arbeitszyklus wird Verdrängerpumpe 4 umgesteuert bzw. reversiert. Sie füllt dann über die Leitung 25 den Arbeitszylinder 23 (rechte Kammer), wodurch dieser wieder einfährt. Die beiden Anschlüsse 26 und 27 der Verdrängerpumpe 4 sind unter Zwischenschaltung von Sitz- bzw. Rückschlagventilen 28 und 29 mit der Leitung 11 und dem Vorratsbehälter 7 verbunden. Je nach Drehrichtung der Verdrängerpumpe 4 öffnet entweder das Sitzventil 29 beim Ausfahren des Arbeitszylinders 23 und Sitzventil 28 beim Einfahren desselben. Für den Fall, dass die den Eingängen des Arbeitszylinders 23 zugeordneten Druckmesssensoren 14 oder 30 einen Druckverlust signalisieren, kann die Steuereinheit 6 die Verdrängerpumpe 4 weiter laufen lassen, wobei ein zu viel geförderter Volumenstrom über die Druckbegrenzungsventile 31 und 32 abgeleitet und über die Leitungen 33 bzw. 34 dem Vorratsbehälter 7 zugeführt wird.

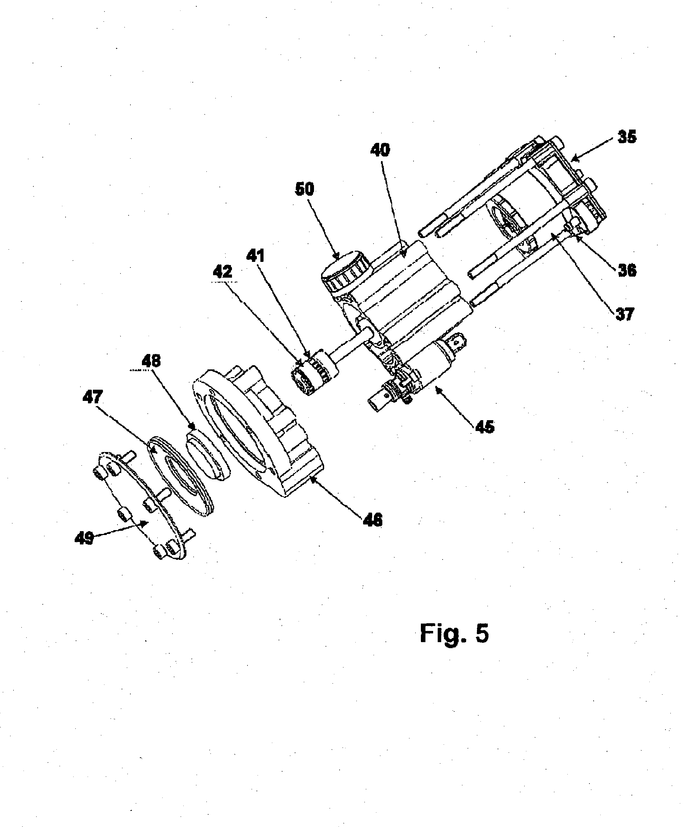

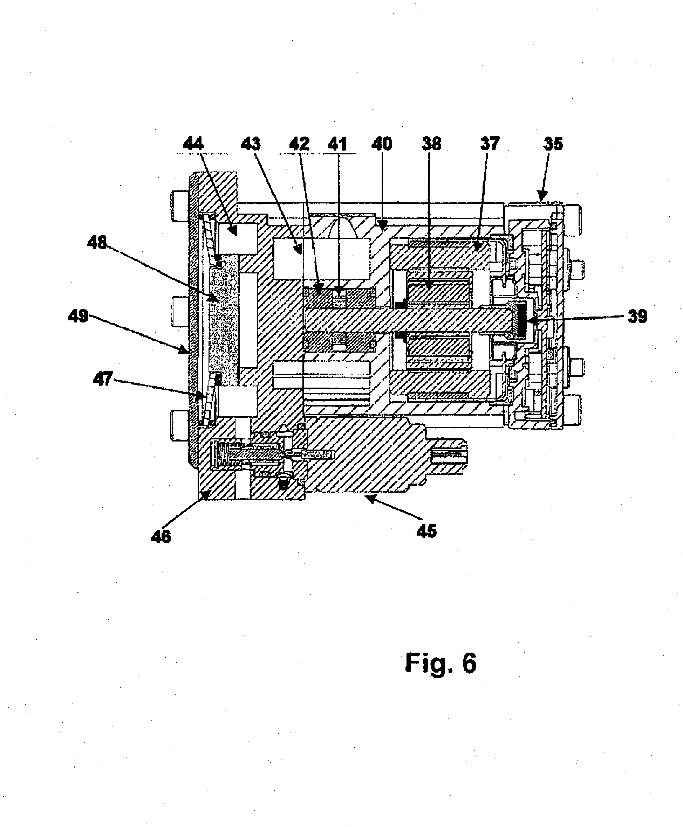

Im Zusammenhang mit den Figuren 5 und 6 wird nachfolgend eine derzeit bevorzugte Ausführungsform der Erfindung beschrieben.

Mit einem modular aufgebauten Gehäuse, das ein lokales Steuergerät 35, ein Motor-Pumpen-Gehäuse 40, ein Ventil-Druckspeicher-Gehäuse 46, einen Abschlussdeckel 49 und ein am Ventil-Druckspeicher-Gehäuse 46 angeflanschtes 2/2-Steuerventil 45 umfasst, wird eine kompakte Baueinheit aufgebaut, die alle Funktionen hinsichtlich Vorratshaltung des hydraulischen Mediums, Erzeugung eines Volumenstromes und Signalverarbeitung in sich vereinigt.

Diese kompakte Baueinheit bedarf bei ihrer Verwendung lediglich noch der Herstellung der hydraulischen und der elektrischen Anschlüsse sowie der Anschlüsse der außerhalb angeordneten Sensoren. Die Kompaktheit dieser Baueinheit ermöglicht es, sie weitgehend frei von Beschränkungen an Orten innerhalb von Fahrzeugen oder Anlagen anzuordnen. So besteht beispielsweise eine Möglichkeit, die kompakte Baueinheit nahe dem die Kupplung betätigenden hydraulischen Arbeitszylinder (Nehmerzylinder) anzuordnen.

Im Motor-Pumpen-Gehäuse 40 sind der Stator 37 und der Rotor 38 des Elektromotors so angeordnet, dass die Welle des Elektromotors das Pumpenrad 41 tragen kann. Beidseitig des Pumpenrades 41 sind die Lagerbrillen 42 angeordnet, wobei die Gesamtanordnung dem Aufbau einer Zahnradpumpe entspricht. Die Lagerbrillen 42 des Pumpenrades 41 bilden auch die Lagerung des Rotors 38 des Elektromotors. Eine der beiden Lagerstellen kann alternativ auch im Ventil-Druckspeicher-Geäuse 46 untergebracht sein. Selbstverständlich kann in Analogie dazu auch die zweite Lagerstelle von der Pumpenbrille ins Motor-Pumpen-Gehäuse 40 verlegt werden.

Das Motor-Pumpen-Gehäuse 40 und der Abschlussdeckel 49 bilden gemeinsam einen Tankraum 43 aus, der das hydraulische Medium aufnimmt. Eine Einfüllöffnung lässt das Befüllen des Tankraums 43 zu. Sie wird mit einer Verschlusskappe 50 abgedeckt.

Im Abschlussdeckel 49 ist fener der Speicherraum 44 angeordnet, der im Zusammenwirken mit einem Mitteldeckel 48 und einer Tellerfeder 47 ein veränderliches Volumen hat und die Aufgabe eines wie oben erwähnten Druckspeichers übernimmt.

Ein 2/2-Steuerventil 45 ist zwischen dem Abschlussdeckel 49 und dem Motor-Pumpen-Gehäuse 30 angeordnet. Es dient der Steuerung des zum Nehmerzylinder zu führenden Volumenstroms.

Mit dem lokalen Steuergerät 35 ist ferner eine Drehzahl-Drehwinkel-Sensorik 39 kombiniert (Figur 6), sodass eine exakte Steuerung der kompakten hydrostatischen Einrichtung zur Kupplungsbetätigung möglich ist

Der Zusammenhalt der einzelnen Segmente der hydraulischen Einrichtung kann auf verschiedene weise, beispielsweise durch Verschrauben der Baueinheiten untereinander, durch geeignete unlösbare Verbindungen zwischen den Einheiten oder wie in Fig. 5 und Fig. 6 dargestellt, durch Stehbolzen, realisiert werden.

Die Anwendung der erfindungsgemäßen hydraulischen Einrichtung beschränkt sich nicht nicht nur auf die Betätigung von Kupplungen, wie beispielsweise Kupplungen für Doppelkupplungsgetriebe, Hybridtrennkupplungen, Stufenautomaten und Schaltgetriebe allgemein. Die vorliegenden hydraulischen Einrichtungen können auch für die Zuschaltung von Allradantrieben (AWD), die Betätigung eines Differenzialgetriebes oder eine Parksperre eingesetzt werden. Hydrostatische Einrichtungen, die mit doppelt wirkenden Arbeitszylindern zusammenarbeiten, können neben Kupplungen auch für Gangsteller, AWD-Zuschaltung und Parksperrenschaltungen verwendet werden.

Die Erfindung schafft also vorteilhafterweise Möglichkeiten, eine an das jeweilige Anforderungsbild anzupassende kompakte hydraulische Einrichtung so auszugestalten, dass sie präzise steuerbar ist, energiesparend arbeiten kann und zudem in den in Frage kommenden Einsatzgebieten aufgrund ihrer kompakten Bauweise ohne Probleme verbaut werden kann.

### Bezugszeichenliste

- 1: Gehäuse
- 2: hydraulische Einrichtung
- 3: Elektromotor
- 4: Verdrängerpumpe
- 5: 2/2-Steuerventil
- 6: Steuereinheit
- 7: Vorratsbehälter
- 8: Leitung
- 9: Leitung
- 10: Arbeitszylinder
- 11: Leitung
- 12: Anschluss
- 13: Kolbenstange
- 14: Druckmesssensor
- 15: Signalleitung
- 16: Elektromagnet
- 17: Federelement
- 18: Leitung
- 19: Sitzventil
- 20: Federanordnung
- 21: Druckspeicher
- 22: Drosseleinrichtung
- 23: Arbeitszylinder
- 24: Leitung
- 25: Leitung
- 26: Anschluss
- 27: Anschluss
- 28: Sitzventil
- 29: Sitzventil
- 30: Druckmesssensor
- 31: Druckbegrenzungsventil
- 32: Druckbegrenzungsventil
- 33: Leitung
- 34: Leitung
- 35: lokales Steuergerät
- 36: integrierter Drucksensor
- 37: Stator
- 38: Rotor
- 39: Drehzahl-Drehwinkel-Sensorik
- 40: Motor-Pumpen-Gehäuse
- 41: Pumpenrad
- 42: Lagerbrille
- 43: Tankraum
- 44: Speicherraum
- 45: 2/2-Steuerventil
- 46: Ventil-Druckspeicher-Gehäuse
- 47: Tellerfeder
- 48: Mitteldeckel
- 49: Abschlussdeckel
- 50: Verschlusskappe

## Patentansprüche

1. Hydraulische Einrichtung, insbesondere zur Betätigung einer Kupplung, mit einem nahe der Kupplung angeordneten hydraulischen Arbeitszylinder (10),
wobei der Arbeitszylinder (10) über eine hydraulische Leitung (8, 9) mit einer Volumenstromquelle verbunden ist und wobei der Volumenstrom der Volumenstromquelle durch eine Steuereinheit (6) in Abhängigkeit von Signalen der der hydraulischen Einrichtung (2) zugeordneten Sensoren steuerbar ist, wobei die Volumenstromquelle durch eine in einem gemeinsamen Gehäuse (1) angeordnete Kombination aus einem Elektromotor (3) und einer hydraulischen Pumpe (4) gebildet ist, **dadurch gekennzeichnet, dass** in dem gemeinsamen Gehäuse (1) die Steuereinheit (6) angeordnet ist.

2. Hydraulische Einrichtung nach Anspruch 1,
**dadurch gekennzeichnet, dass** die Pumpe (4) eine Verdrängerpumpe, vorzugsweise in der Form einer Zahnradpumpe, einer Flügelzellenpumpe, einer Radialkolbenpumpe oder einer Axialkolbenpumpe ist.

3. Hydraulische Einrichtung nach Anspruch 1 oder 2,
**dadurch gekennzeichnet, dass** die Kombination aus dem Elektromotor (3) und der Pumpe (4) in zwei Drehrichtungen betreibbar ist.

4. Hydraulische Einrichtung nach einem der Ansprüche 1 bis 3,
**dadurch gekennzeichnet, dass** der Pumpe (4) eine Drosseleinrichtung (22) parallel geschaltet ist.

5. Hydraulische Einrichtung nach Anspruch 1,
**dadurch gekennzeichnet, dass** in dem gemeinsamen Gehäuse (1) ein Vorratsbehälter (7) für das hydraulische Medium und/oder ein Druckspeicher (21) angeordnet sind.

6. Hydraulische Einrichtung nach einem der Ansprüche 1 bis 5,
**dadurch gekennzeichnet, dass** die Steuereinheit (6) Komponenten umfasst, die Messsignale von Sensoren verarbeiten kann, die innerhalb der hydraulischen Einrichtung (2) oder außerhalb derselben angeordnet sind, wobei die Messsignale Signale des Elektromotors (3) und/oder der Pumpe (4), und/oder Druckmesswerte und Wegmesswerte des Arbeitszylinders (10) und/oder Signale eines durch den Arbeitszylinder angetriebenen externen Elements umfassen.

7. Hydraulische Einrichtung nach einem der Ansprüche 1 bis 6,
**dadurch gekennzeichnet, dass** der Arbeitszylinder (10) ein einfach wirkender Arbeitszylinder (10), ein einfach wirkender Arbeitszylinder mit einer Federanordnung (20) zur Rückstellung oder ein doppelt wirkender Arbeitszylinder (23) ist.

8. Verfahren zur Betätigung eines Arbeitszylinders mit einer hydraulischen Einrichtung, nach einem der Ansprüche 1 bis 7,
**dadurch gekennzeichnet, dass** die hydraulische Einrichtung (2) über ihre Steuereinheit (6) einen durch ein Stellorgan oder durch eine Steuerung generierten Startbefehl erhält, dass die Steuereinheit (6) nachfolgend die Kombination aus dem Elektromotor (3) und der Pumpe (4) in Betrieb setzt und wenigstens einen Arbeitszyklus ausführt, durch den der Arbeitszylinder (10) ausgefahren wird, und dass die Steuereinheit (6) nach Erhalt eines Beendigungssignals einen Druckabfall im Leitungssystem veranlasst, wobei der Arbeitszylinder (10) eingefahren wird..

9. Verfahren nach Anspruch 8, **dadurch gekennzeichnet, dass** nach erfolgtem Druckaufbau im Arbeitszylinder (10) ein Sitzventil (19) geschlossen wird, um die hydraulische Strecke zwischen der Pumpe (4) und dem Arbeitszylinder (10) zu verschließen.

10. Verfahren nach Anspruch 8 oder 9, **dadurch gekennzeichnet, dass** der Druckabfall nach Beendigung eines Arbeitszyklus durch eine Druckentlastung im Arbeitszylinder (10), durch Öffnen des Sitzventils (19), durch Steuern der Kombination aus dem Elektromotor (3) und der Pumpe (4) in den Reversierbetrieb oder durch Spaltverluste in der Pumpe (4) erfolgt.

## Claims

1. Hydraulic device, in particular for actuating a clutch, with a hydraulic working cylinder (10) arranged near the clutch, the working cylinder (10) being connected via a hydraulic line (8, 9) to a volumetric flow source, and the volumetric flow of the volumetric flow source being controllable by means of a control unit (6) as a function of signals from the sensors assigned to the hydraulic device (2), the volumetric flow source being formed by a combination, arranged in a common housing (1), of an electric motor (3) and of a hydraulic pump (4), **characterized in that** the control unit (6) is arranged in the common housing (1).

2. Hydraulic device according to Claim 1, **characterized in that** the pump (4) is a positive displacement pump, preferably in the form of a gear pump, of a vane cell pump, of a radial piston pump or of an axial piston pump.

3. Hydraulic device according to Claim 1 or 2, **characterized in that** the combination of the electric motor (3) and of the pump (4) is operable in two directions of rotation.

4. Hydraulic device according to one of Claims 1 to 3,
**characterized in that** a throttle device (22) is connected in parallel to the pump (4).

5. Hydraulic device according to Claim 1, **characterized in that** a reservoir (7) for the hydraulic medium and/or a pressure accumulator (21) are/is arranged in the common housing (1).

6. Hydraulic device according to one of Claims 1 to 5,
**characterized in that** the control unit (6) comprises components which can process the measurement signals of sensors which are arranged inside the hydraulic device (2) or outside the latter, the measurement signals comprising signals from the electric motor (3) and/or the pump (4) and/or pressure measurement values and displacement measurement values of the working cylinder (10) and/or signals from an external element driven by the working cylinder.

7. Hydraulic device according to one of Claims 1 to 6,
**characterized in that** the working cylinder (10) is a single-acting working cylinder (10), a single-acting working cylinder with a spring arrangement (20) for return or a double-acting working cylinder (23).

8. Method for actuating a working cylinder by means of a hydraulic device according to one of Claims 1 to 7,
**characterized in that** the hydraulic device (2) receives via its control unit (6) a starting command generated by an actuating member or by a control, **in that** the control unit (6) subsequently puts into operation the combination of the electric motor (3) and of the pump (4) and executes at least one work cycle, by means of which the working cylinder (10) is extended, and **in that** the control unit (6), after receiving a termination signal, causes a pressure drop in the line system, the working cylinder (10) being retracted.

9. Method according to Claim 8, **characterized in that**, after the pressure build-up in the working cylinder (10) has taken place, a seat valve (19) is closed in order to close the hydraulic section between the pump (4) and the working cylinder (10).

10. Method according to Claim 8 or 9, **characterized in that**, after the termination of a work cycle, the pressure drop takes place by means of a relieving of the pressure in the working cylinder (10) by the opening of the seat valve (19), by putting the combination of the electric motor (3) and of the pump (4) into the reversing operation or by gap losses in the pump (4).

## Revendications

1. Dispositif hydraulique, en particulier pour l'actionnement d'un embrayage, comprenant un cylindre de travail hydraulique (10) disposé à proximité de l'embrayage, le cylindre de travail (10) étant connecté à une source de débit volumique par le biais d'une conduite hydraulique (8, 9) et le débit volumique de la source de débit volumique pouvant être commandé par une unité de commande (6) en fonction de signaux des capteurs associés au dispositif hydraulique (2), la source de débit volumique étant formée par une combinaison d'un moteur électrique (3) et d'une pompe hydraulique (4) disposée dans un boîtier commun (1), **caractérisé en ce que** l'unité de commande (6) est disposée dans le boîtier commun (1).

2. Dispositif hydraulique selon la revendication 1, **caractérisé en ce que** la pompe (4) est une pompe volumétrique, de préférence sous la forme d'une pompe à engrenages, d'une pompe à palettes, d'une pompe à piston radial ou d'une pompe à piston axial.

3. Dispositif hydraulique selon la revendication 1 ou 2,
**caractérisé en ce que** la combinaison du moteur électrique (3) et de la pompe (4) peut fonctionner dans deux sens de rotation.

4. Dispositif hydraulique selon l'une quelconque des revendications 1 à 3,
**caractérisé en ce que**
la pompe (4) est branchée en parallèle avec un dispositif d'étranglement (22).

5. Dispositif hydraulique selon la revendication 1, **caractérisé en ce qu'**un réservoir (7) pour le fluide hydraulique et/ou un accumulateur de pression (21) sont disposés dans le boîtier commun (1).

6. Dispositif hydraulique selon l'une quelconque des revendications 1 à 5,
**caractérisé en ce que** l'unité de commande (6) comprend des composants qui peuvent traiter des signaux de mesure de capteurs disposés à l'intérieur du dispositif hydraulique (2) ou à l'extérieur de celui-ci, les signaux de mesure comprenant des signaux du moteur électrique (3) et/ou de la pompe (4) et/ou des valeurs de mesure de pression et des valeurs de mesure de distance du cylindre de travail (10) et/ou des signaux d'un élément externe entraîné par le cylindre de travail.

7. Dispositif hydraulique selon l'une quelconque des revendications 1 à 6,
**caractérisé en ce que** le cylindre de travail (10) est un cylindre de travail (10) à simple action, un cylindre de travail à simple action avec un agencement de ressort (20) pour le rappel ou un cylindre de travail à double action (23).

8. Procédé d'actionnement d'un cylindre de travail comprenant un dispositif hydraulique selon l'une quelconque des revendications 1 à 7,
**caractérisé en ce que** le dispositif hydraulique (2) obtient, par le biais de son unité de commande (6), un ordre de démarrage généré par un actionneur ou par une commande, **en ce que** l'unité de commande (6) met ensuite en fonctionnement la combinaison du moteur électrique (3) et de la pompe (4) et effectue au moins un cycle de travail, par lequel le cylindre de travail (10) est sorti, et **en ce que** l'unité de commande (6), à la réception d'un signal de fin, cause une chute de pression dans le système de conduite, le cylindre de travail (10) étant alors rentré.

9. Procédé selon la revendication 8, **caractérisé en ce qu'**après l'augmentation réussie de pression dans le cylindre de travail (10), une soupape à siège (19) est fermée, afin de fermer le trajet hydraulique entre la pompe (4) et le cylindre de travail (10).

10. Procédé selon la revendication 8 ou 9, **caractérisé en ce que** la chute de pression a lieu après la fin d'un cycle de travail par une détente de pression dans le cylindre de travail (10), par ouverture de la soupape à siège (19), par commande de la combinaison du moteur électrique (3) et de la pompe (4) en mode de fonctionnement réversible ou par des pertes dans les fentes dans la pompe (4).
